# EUROPEAN PATENT SPECIFICATION

(11) **EP 0 414 976 B1**
(45) Date of publication and mention of the grant of the patent: **20.12.1995**
(21) Application number: 89311404.1
(22) Date of filing: 03.11.1989
(51) Int. Cl.: G11B 5/39

(54) **Method of setting the magnetic domain structure of a magneto-resistive sensor**
Methode zur Einstellung der magnetischen Domäne-Struktur eines magnetoresistiven Fühlers
Méthode pour établir la structure de domaine magnétique d'un capteur magnétorésistif

(30) Priority: 02.08.1989 US 388690
(43) Date of publication of application: 06.03.1991
(73) Proprietor: SEAGATE TECHNOLOGY INTERNATIONAL, Georgetown, Grand Cayman Island (KY)
(72) Inventor: Mowry, Greg S., Burnsville Minnesota 55337 (US); Mitchell, Terry B., Bloomington Minnesota (US)
(74) Representative: Sturt, Clifford Mark

(56) References cited:
- EP-A- 0 279 536
- EP-A- 0 298 417
- US-A- 3 975 772
- US-A- 4 809 109
- IEEE TRANSACTIONS ON MAGNETICS. vol. MAG22, no. 5, September1986, NEW YORK US pages 845 - 846; S.H. GOPAL ET AL.: 'MODELS FOR M-R HEADANALYSIS'

## Description

This invention relates to methods of setting the magnetic domain structure of magneto-resistive sensors of magneto-resistive write/sense heads after completion of fabrication of the heads.

Magneto-resistive (MR) sensors are employed as sense or read transducers in write/sense heads of some types of magnetic disk drives. The electrical resistance of a MR sensor changes depending upon the sensor's proximity to a magnetic field. Additionally, the electrical resistance of a MR sensor positioned in a magnetic field varies as a function of the strength of the field. A MR sensor positioned above a magnetic data storage disk can be used to sense the magnetic fields associated with localised magnetic domains impressed on the disk. Such local magnetic domains represent data which the MR sensor reads.

A MR sensor typically comprises a thin layer of ferro-magnetic material exhibiting a magneto-resistive effect, such as a nickel/iron alloy. The ferro-magnetic layer is deposited on an electrically insulting substrate. MR sensors work best where the active region thereof has no magnetic domain boundaries. In other words, the MR sensor should be of a single domain. The presence of domain boundaries in the MR sensor gives rise to Barkhausen noise, a phenomenon caused by irreversible motion of magnetic domains in the presence of an applied magnetic field. Barkhausen noise cannot occur if no domain boundaries exist.

A number of designs for single domain MR sensors have been proposed. Maintaining a MR sensor in a single domain state necessarily implies domain stability in the sensor. Magnetic stability is enhanced where the structural components of the MR sensor promote that stability. Magnetic stability becomes a detriment, however, where the MR sensor is in other than a single magnetic domain state. Typically, a single domain MR sensor is established in its desired magnetisation at the time it is deposited because the stabilising structure of a MR head of which the MR sensor is part, makes magnetic setting of the MR sensor after completion of the MR head difficult. Great care has to be taken in the remaining fabrication steps of the MR head after establishing the single domain state in the MR sensor to avoid its loss and consequent locking of multi-domain states in the MR sensor.

IEEE Transactions on Magnetics, Vol. MAG22, No. 5, September 1986, New York, U.S., pages 845-846 discloses a magnetoresistive head which comprises a top pole, and a bottom pole with a gap therebetween. A transducer is positioned in the gap. The top pole width is 9 »m, the bottom pole width is semi-infinite, the gap is 1»m, the top and bottom pole thickness is 1»m, and the transducer thickness is 0.05»m.

U.S, 3,975,772 discloses a double shielded magnetoresistive sensing element. The element includes relatively thick shields and substantially thinner shields between the thick shields and the magnetoresistive element. The output pulse waveform resulting from the magnetoresistive element sensing a magnetic transition is improved permitting a higher linear density.

A double gap magneto-resistive head such as that described in US-A-4,803,580 has separate write and sense gaps defined by arranging linearly a top magnetic pole, a middle magnetic pole and a trailing shield. The top pole, the middle pole and the trailing shield are all constructed from magnetic materials, the top and middle poles being ferro-magnetic and the trailing shield being ferri-magnetic. The write gap in the gap between the top pole and the middle pole and the sense gap is the gap between the middle pole and the trailing shield. The magneto-resistive sensor is positioned in the shield gap between the middle pole and the trailing shield. This MR sensor is of a type which can support a single domain state. The middle pole and the trailing shield operate as shields for the MR sensor in operation, substantially blocking from the MR sensor magnetic fields other than a magnetic field generated by a local magnetic domain positioned directly under the sense gap. This shielding is generally quite effective against the field strengths encountered in disk drive operating environments.

Magnetic fields encountered by a MR write/sense head during manufacture can, however, be much stronger than those encountered in disk drive operating environments. The manufacturing processes currently used to produce MR heads which meet the small physical size and tight tolerances demanded of the heads makes avoidance of these strong magnetic fields, typically exceeding 100 oersteds, both difficult and expensive.

A slider on which an MR write/sense head is integrated has dimensions of the order of 1 to 3 millimetres. In a disk drive, the head is required to maintain a flying height above a rotating disk which is only a fraction of even these small dimensions. The surface of the head facing the disk is called the air bearing surface (ABS). The ABS is an extremely flat and highly polished surface, manufactured to exacting tolerances. Accordingly, the manufacture of the MR write/sense heads requires the use of precision processing machines. Such machines exist, having been developed for use in the manufacture of inductive thin film transducers, a device having applications similar to those of MR write/sense heads. Manufacturing economics is one factor encouraging the use of the same equipment for both inductive thin film heads and MR heads.

Devices built to meet the exacting dimensional standards are typically built on milling and cutting machines using magnetic chucks. Mechanical chucks cannot be used, generally, because mechanical clamping tends to deform the part being worked upon. This makes it difficult to machine a surface which meets desired tolerances upon release of the stress imposed by the chuck. A machining environment also tends to be corrosive. If a mechanical chuck is used, its reference surfaces can be exposed to corrosive effects with resulting loss of accuracy. However, positioning a magneto-resistive head magnetically results in exposure of the MR sensor to magnetic fields which can disrupt its single domain condition.

The present invention is directed to a method of setting the magnetic domain structure of a MR sensor positioned in a gap between two shield layers of magnetic material. The MR sensor and the shield layers are typically parts of an otherwise fully fabricated MR write/sense head. Such an MR head can include layers of polyimide or other organic polymer insulation, anti-ferro-magnetic exchange-bias material exchange coupled to the MR sensor, electrical contacts and the like. At least one of the shield layers is preferably made of a ferri-magnetic material having a Néel temperature below the melting point of the organic insulting layers of the head.

According to one aspect of the present invention as provided a method of setting the magnetic domain structure of a magneto-resistive sensor, positioned in a magneto-resistive write/sense head, the magneto-resistive head including a ferri-magnetic substrate, a ferro-magnetic middle pole, positioned to define a gap between itself and the substrate, and the magneto-resistive sensor, the magneto-resistive sensor being disposed in the gap, the method being characterised by comprising the steps of: heating the magneto-resistive head above the Néel temperature of the ferri-magnetic substrate; applying an external magnetic field to the magneto-resistive head to substantially eliminate domain boundaries from the magneto-resistive sensor; reducing the intensity of the external magnetic field to hold the magnetisation of the magneto-resistive sensor during cooling; and cooling the magneto-resistive head to a temperature below the Néel temperature of the ferri-magnetic substrate.

The magneto-resistive head may further include anti-ferro-magnetic material exchange coupled with the magneto-resistive sensor, the anti-ferro-magnetic material having a Néel temperature higher than that of the ferri-magnetic substrate, the method preferably comprising the further steps of the magneto-resistive head further includes anti-ferro-magnetic material exchange coupled with the magneto-resistive sensor, the anti-ferro-magnetic material having a Néel temperature higher than that of the ferri-magnetic substrate, the method being characterised by comprising the further steps of: after heating the magneto-resistive head above the Néel temperature of the ferri-magnetic substrate, heating the magneto-resistive head above the Néel temperature of the anti-ferro-magnetic material.

According to a further aspect of the present invention there is provided the method of setting the magnetic domain structure of a magneto-resistive sensor of a magneto-resistive head, the magneto-resistive sensor being positioned in a gap between two shield layers, of magnetic material, the method being characterised by comprising the steps of: heating the magneto-resistive head, to a point where at least one of the shield layers becomes paramagnetic; applying an external magnetic field to the magneto-resistive sensor and the shield layers to establish a single magnetic domain in the magneto-resistive sensor; reducing the intensity of the external magnetic field to hold the magnetisation of the magneto-resistive sensor during cooling; and cooling the magneto-resistive head to a temperature at which both shield layers are magnetic.

The method may also comprise limiting the width of the magnetoresistive sensor to the width of the ferromagnetic middle pole less about ten times the thickness of the middle pole.

The method may further comprise forming one of the shield layers of a ferrite material and limiting the width of the magnetoresistive sensor to the width of the other shield layer less about ten times the thickness of said other shield layer.

In one embodiment of the present invention employment of the method is made possible by the MR head having at least one layer, preferably a trailing shield layer, made of a magnetic material having a Néel temperature below the melting point of the polyimide layer of the MR head. The MR head may be a ferri-magnetic trailing shield, typically a nickel-zinc ferrite layer.

The invention is illustrated, merely by way of example, in the accompanying drawings, in which:-
Figure 1 is a cross sectional schematic view of a magnetic chuck;
Figure 2 is a cross sectional view of a double-gap MR head illustrating orientation of the head with respect to a magnetic media disk;
Figure 3 is an elevation of a magneto-resistive sensor layer with overlying of exchange-bias material at the ends;
Figure 4a is an end view of magnetically significant elements of a double-gap MR head;
Figure 4b is an end view of the magnetically significant portions of the double-gap MR head upon heating of the head; and
Figure 5 is a graph of the relative saturisation magnetisation of the magnetic materials of the MR head as a function of absolute temperature.

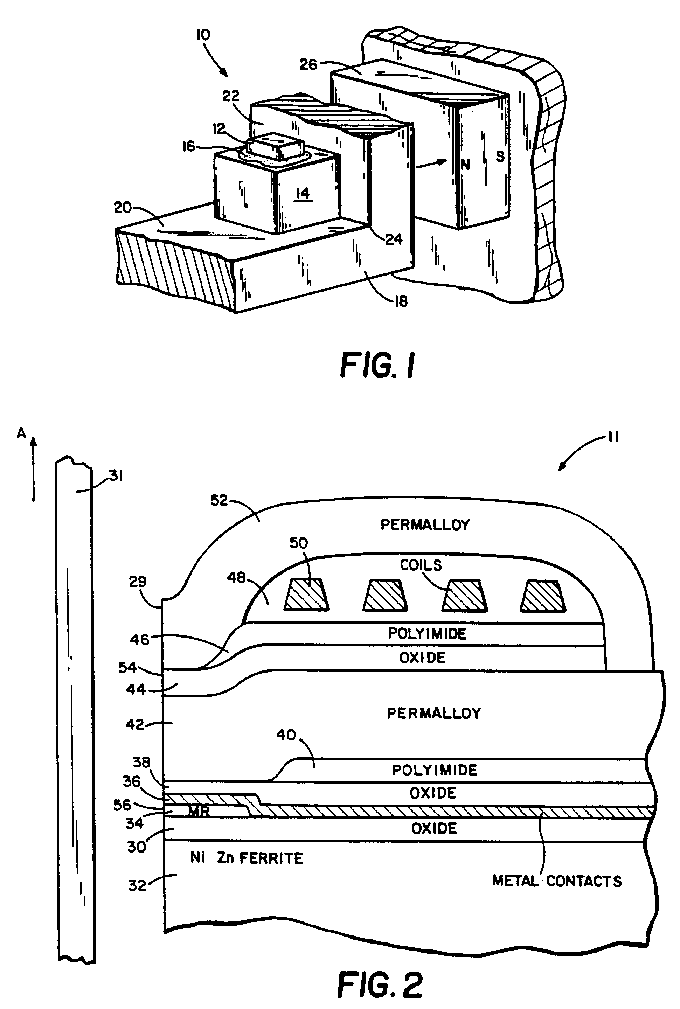

Figure 1 illustrates the machining environment to which magneto-resistive write/sense heads are subjected after fabrication. A workpiece 12 is positioned in a magnetic chuck assembly 10 for a step such as grinding. The workpiece 12 is temporarily affixed to a cubic mounting tool 14 by an epoxy resin layer 16. The cubic mounting tool 14 is made of a magnetic material such as high grade tool steel. The mounting tool 14 rests on a support 18, which includes two flat positioning surfaces 20, 22 which meet at a right angle 24. A magnet 26 is positionable adjacent the support 18 to attract the mounting tool 14 squarely into the right angle 24 formed by the surfaces 20, 22. Highly accurate placement of the mounting tool 14 is achieved for carrying out of the desired fabrication step of the workpiece 12. However, the workpiece 12 is exposed to strong magnetic fields. Where the workpiece 12 is a MR head there is a strong potential for disruption of the domain structure of a MR sensor in the MR head.

Figure 2 illustrates an exemplary double-gap MR head 11 in a disk drive environment. The MR head has an air bearing surface (ABS) 29 which meets exacting tolerances for flatness and degree of polish, and which is machined with the MR head 11 held in a magnetic chuck. The ABS 29 is formed by lapping the MR head 11 in a process such as that described with reference to Figure 1.

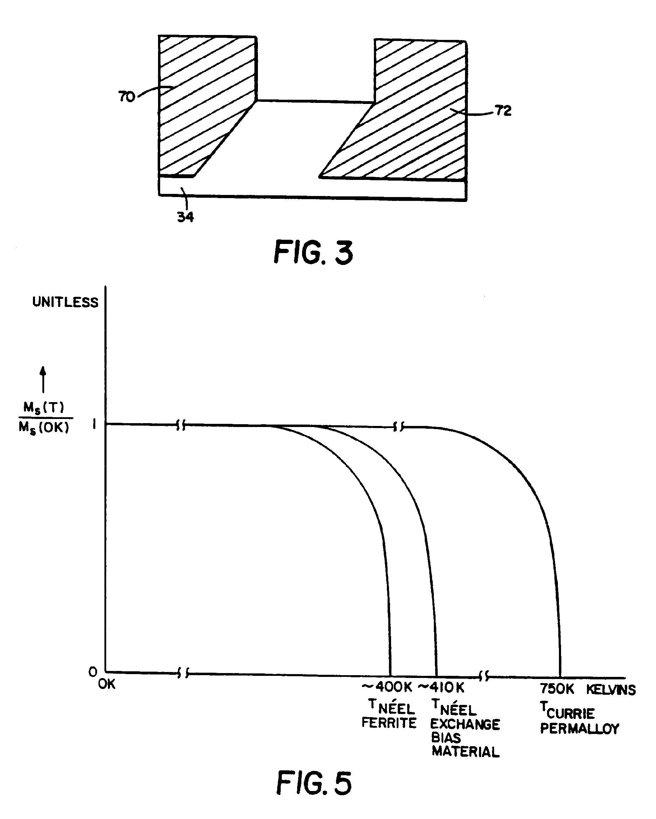

The ABS 29 faces a magnetic media data storage disk 31 having a direction of travel relative to the MR head 11 indicted by arrow A. The spacing between the ABS 29 and the disk 31 is preferably minimised while avoiding contact between the MR head 11 and the disk. A write gap 54 is defined on the ABS 29 by an oxide layer 44 between the terminating ends of a top magnetic pole 52 and a middle magnetic pole 42. A sense gap 56 is defined on the ABS 29 by oxide layers 38, 30, and a MR sensor layer 34 between the terminating ends of the middle magnetic pole 42 and a ferrite substrate 32 which may be of a nickel-zinc ferrite material, although other ferrites can be used, for example, manganese-zinc ferrite. Nickel-zinc ferrite is a ferri-magnetic material having a Néel temperature of about 400°K. The oxide layer 30, preferably aluminium oxide, is deposited on the substrate 32. The MR sensor layer 34 is positioned on top of a portion of the oxide layer 30 and extends to the ABS 29. Anti-ferro-magnetic material (see Figure 3) may be positioned on the MR sensor layer 34 for exchange biasing the sensor in a known manner. Metal contacts 36 (one being shown in Figure 2) are positioned in contact with the magneto-resistive sensor layer 34. An oxide layer 38 over-lays the magneto-resistive sensor layer 34 and the metal contacts 36. A polyimide layer 40 overlays a portion of the oxide layer 38 away from the ABS 29.

The middle magnetic pole 42, preferably of a ferro-magnetic material, over-lays the polyimide layer 40 and the oxide layer 38. The oxide layer 44 and the polyimide layers 46, 48 space the middle magnetic pole 42 from the top magnetic pole 52. The top magnetic pole 52 is also of a ferro-magnetic alloy, typically but not exclusively, permalloy. An electrically conductive coil 50 is provided for generating magnetic fields across the write gap 54 and is positioned in the polyimide layer 48. The middle magnetic pole 42 and the substrate 32 provide first and second layered shields for the MR sensor layer 34.

Figure 3 illustrates the locations of deposits 70, 72 of anti-ferro-magnetic material over opposite ends of an elongated stripe of magneto-resistive material forming the MR sensor layer 34. The anti-ferro-magnetic material is exchange coupled to the magneto-resistive material and is used for locking the magnetisation of the magneto-resistive material.

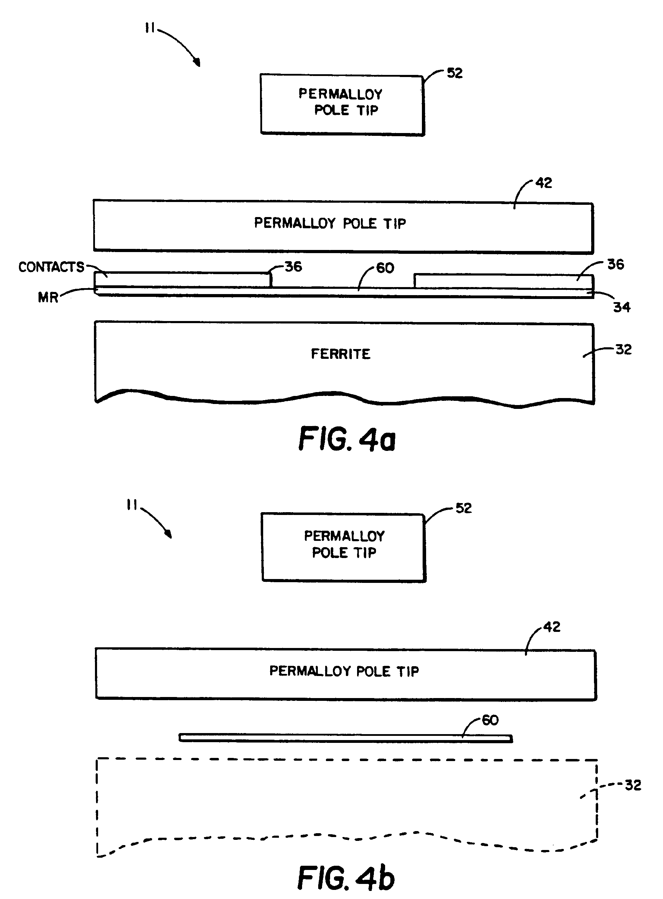

Figure 4a illustrates the magnetically significant components of the MR head 11 as they appear looking toward the ABS 29. Spacing and insulating layers are omitted for clarity. The substrate 32 and the middle magnetic pole 42 are spaced providing a shielded gap in which a MR sensor 60 is disposed. The MR sensor 60 comprises that portion of the MR sensor layer 34 between the metal contacts 36, defined now as the width of the MR sensor 60. The top magnetic pole 52 is depicted as being of substantially less width and about the same thickness as the middle magnetic pole 42. This arrangement protects the MR sensor 60 from interference from magnetic fields generated across the write gap 54 between the top magnetic pole 52 and the middle magnetic pole 42.

The present process permits exchange stabilised MR heads to be magnetically set after all physical processing of the MR head is complete. Figure 4b illustrates the magnetic components of the MR head 11 after heating the head to a temperature above the Neel temperature of the nickel-zinc ferrite substrate 32, and the Néel temperature of the anti-ferro-magnetic material if any, but remaining well below the Curie temperatures of the top and middle magnetic poles 42, 52. The Néel temperature of the nickel-zinc ferrite substrate 32 is about 120°C to 130°C or 400°K. The Néel temperature of a typical iron-manganese anti-ferro-magnetic alloy is about 410°K. Raising the MR head 11 temperature to just above these temperatures does not affect the integrity of the several polyimide spacing layers. Above their respective Néel temperatures, the substrate 32 and any anti-ferro-magnetic layers 70, 72 become paramagnetic and no longer shield the MR sensor 60.

The MR sensor 60 can be exposed, after heating as described above, to an external magnetic field which consistently orders the internal magnetic domain structure of the MR sensor 60 into a single domain. Thus all domain boundaries in the MR sensor 60 are cleared out of the MR sensor and the remaining single domain is oriented in the direction of the applied field. A magnetic field of 300 to 500 oersteds is used to set the MR sensor to a single domain. Thereafter, the applied magnetic field is reduced to 5 to 10 oersteds for the purpose of holding the magnetisation of the MR sensor 60 in the proper direction during cooling. The MR head is then cooled below the Néel temperature for the substrate 32 and the magnetic field is reduced to zero.

The MR sensor 60 is preferably not as wide as the middle magnetic pole 42. This prevents de-stabilisation of the MR sensor 60 by de-magnetising fields generated by the middle magnetic pole 42 upon exposure to the high intensity magnetic field of the process. Experiment has shown that the method of the present invention works best if the width of the MR sensor 60 is no greater than the width of the middle magnetic pole 42 less ten times the thickness of the middle magnetic pole. It will be appreciated that although the MR sensor 60 is described as shielded herein, such shielding is not always effective against magnetic field strengths of the order of several hundred oersteds.

Figure 5 illustrates changes in the relative saturation magnetisation of the magnetic materials of the MR head 11 as a function of temperature in °K. A "0" saturation magnetisation indicates a temperature where the materials become paramagnetic. A "1" saturation magnetisation is the saturation magnetisation at 0°K. A typical permalloy alloy used in MR sensors becomes paramagnetic at its Curie temperatures of 750°K. The exchange bias effect of Fe-Mn anti-ferro-magnetic material disappears above the Néel temperature of 410°K. The nickel-zinc ferrite used for one of the shield layers has a Néel temperature of 400°K. Thus the anti-ferro-magnetic material exhibits a higher Néel temperature than the ferrite substrate. During cooling of the MR head from a temperature exceeding 410°K, the MR sensor remains unshielded and bathed in a controlled magnetic field until the exchange bias effect re-asserts itself. The presence of the exchange bias effect helps stabilise the MR sensor when control over the magnetic fields around the MR sensor is lost through the ferrite shield again becoming magnetic.

## Claims

1. A method of setting the magnetic domain structure of a magneto-resistive sensor (34, 60), positioned in a magneto-resistive write/sense head (11), the magneto-resistive head including a ferri-magnetic substrate (32), a ferro-magnetic middle pole (42), positioned to define a gap (56) between itself and the substrate (32), and the magneto-resistive sensor (34, 60), the magneto-resistive sensor being disposed in the gap (56), the method being characterised by comprising the steps of: heating the magneto-resistive head (11) above the Néel temperature of the ferri-magnetic substrate (32); applying an external magnetic field to the magneto-resistive head to substantially eliminate domain boundaries from the magneto-resistive sensor (34, 60); reducing the intensity of the external magnetic field to hold the magnetisation of the magneto-resistive sensor during cooling; and cooling the magneto-resistive head to a temperature below the Néel temperature of the ferri-magnetic substrate (32).

2. A method as claimed in claim 1 in which the magneto-resistive head (11) further includes anti-ferro-magnetic material (70, 72) exchange coupled with the magneto-resistive sensor (34, 60), the anti-ferro-magnetic material having a Néel temperature higher than that of the ferri-magnetic substrate (32), the method being characterised by comprising the further steps of: after heating the magneto-resistive head (11) above the Néel temperature of the ferri-magnetic substrate (32), heating the magneto-resistive head above the Néel temperature of the anti-ferro-magnetic material.

3. A method of setting the magnetic domain structure of a magneto-resistive sensor (34, 60) of a magneto-resistive head (11), the magneto-resistive sensor being positioned in a gap (56) between two shield layers (32, 42), of magnetic material, the method being characterised by comprising the steps of: heating the magneto-resistive head (11), to a point where at least one of the shield layers (32, 42) becomes paramagnetic; applying an external magnetic field to the magneto-resistive sensor (34, 60) and the shield layers (32, 42) to establish a single magnetic domain in the magneto-resistive sensor; reducing the intensity of the external magnetic field to hold the magnetisation of the magneto-resistive sensor (34, 60) during cooling; and cooling the magneto-resistive head (11) to a temperature at which both shield layers (32, 42) are magnetic.

4. A method as claimed in claim 1 or 2 further comprising: limiting the width of the magneto-resistive sensor (60) to the width of the ferromagnetic middle pole (42) less about ten times the thickness of the middle pole (42).

5. A method as claimed in claim 3 further comprising:
forming one of the shield layers (32) of a ferrite material; and
limiting the width of the magneto-resistive sensor (60) to the width of the other shield layer (42) less about ten times the thickness of said other shield layer (42).

## Patentansprüche

1. Verfahren zur Einstellung der magnetischen Domänen-Struktur eines magnetoresistiven Sensors (34, 60), der in einem magnetoresistiven Schreib-/Meß-Kopf (11) angeordnet ist, wobei der magnetoresistive Kopf ein ferrimagnetisches Substrat (32), einen ferromagnetischen mittleren Pol (42), der so angeordnet ist, daß er einen Spalt (56) zwischen sich selbst und dem Substrat (32) bildet, und den magnetoresistiven Sensor (34, 60) einschließt, wobei der magnetoresistive Sensor in dem Spalt (56) angeordnet ist und das Verfahren dadurch gekennzeichnet ist, daß es die folgenden Schritte umfaßt: Erwärmen des magnetoresistiven Kopfes (11) auf einen Wert oberhalb der Néel-Temperatur des ferrimagnetischen Substrats (32); Anlegen eines äußeren Magnetfeldes an den magnetoresistiven Kopf, um Domänen-Grenzen aus dem magnetoresistiven Sensor (34, 60) im wesentlichen zu beseitigen; Verringern der Intensität des äußeren Magnetfeldes, um die Magnetisierung des magnetoresistiven Sensors während des Abkühlens zu halten; und Abkühlen des magnetoresistiven Kopfes auf eine Temperatur unterhalb der Néel-Temperatur des ferrimagnetischen Substrates (32).

2. Verfahren nach Anspruch 1, bei dem der magnetoresistive Kopf (11) weiterhin antiferromagnetisches Material (70, 72) einschließt, das in Austauschkopplung mit dem magnetoresistiven Sensor (34, 60) steht, wobei das antiferromagnetische Material eine Néel-Temperatur aufweist, die höher als die des ferrimagnetischen Substrates (32) ist, wobei das Verfahren dadurch gekennzeichnet ist, daß es die weiteren Schritte der Erhitzung des magnetoresistiven Kopfes auf einen Wert oberhalb der Néel-Temperatur des antiferromagnetischen Materials nach dem Erhitzen des magnetoresistiven Kopfes (11) auf einen Wert oberhalb der Néel-Temperatur des ferrimagnetischen Substrates (32) umfaßt.

3. Verfahren zur Einstellung der magnetischen Domänen-Struktur eines magnetoresistiven Sensors (34, 60) eines magnetoresistiven Kopfes (11), wobei der magnetoresistive Sensor in einem Spalt (56) zwischen zwei Abschirmschichten (32, 42) aus magnetischem Material angeordnet ist und das Verfahren dadurch gekennzeichnet ist, daß es die folgenden Schritte umfaßt: Erhitzen des magnetoresistiven Kopfes (11) bis zu einem Punkt, bei dem zumindestens eine der Abschirmschichten (32, 42) paramagnetisch wird; Anlegen eines äußeren Magnetfeldes an den magnetoresistiven Sensor (34, 60) und die Abschirmschichten (32, 42) zur Ausbildung einer einzigen magnetischen Domäne in dem magnetoresistiven Sensor; Verringern der Intensität des äußeren Magnetfeldes zum Halten der Magnetisierung des magnetoresistiven Sensors (34, 60) während des Abkühlens; und Abkühlen des magnetoresistiven Kopfes (11) auf eine Temperatur, bei der beide Abschirmschichten (32, 42) magnetisch sind.

4. Verfahren nach Anspruch 1 oder 2, das weiterhin die Begrenzung der Breite des magnetoresistiven Sensors (50) auf die Breite des ferromagnetischen mittleren Pols (42) abzüglich ungefähr der zehnfachen Dicke des mittleren Pols (42) umfaßt.

5. Verfahren nach Anspruch 3, das weiterhin die Ausbildung einer der Abschirmschichten (32) aus einem Ferritmaterial und die Begrenzung der Breite des magnetoresistiven Sensors (60) auf die Breite der anderen Abschirmschicht (42) abzüglich ungefähr der zehnfachen Dicke der anderen Abschirmschicht (42) umfaßt.

## Revendications

1. Procédé pour établir la structure de domaine magnétique d'un capteur magnétorésistif (34, 60), placé dans une tête (11) magnétorésistive d'écriture/détection, la tête magnétorésistive comprenant un substrat ferrimagnétique (32) un pôle ferromagnétique médian (42) placé de manière à définir un entrefer (56) entre lui et le substrat (32), et le capteur magnétorésistif 34, 60), le capteur magnétorésistif étant placé dans l'entrefer (56), le procédé étant caractérisé en ce qu'il comprend les étapes suivantes : chauffer la tête magnétorésistive (11) au-dessus de la température de Neel du substrat ferrimagnétique (32) ; appliquer un champ magnétique externe à la tête magnétorésistive pour éliminer sensiblement les limites du domaine du capteur magnétorésistif (34, 60) ; réduire l'intensité du champ magnétique extérieur pour maintenir l'aimantation du capteur magnétorésistif pendant le refroidissement ; et refroidir la tête magnétorésistive jusqu'à une température inférieure à la température de Neel du substrat ferrimagnétique (32).

2. Procédé selon la revendication 1 dans lequel la tête magnétorésistive (11) comprend encore un matériau anti-ferromagnétique (70, 72) couplé par échange avec le capteur magnétorésistif (34, 60), le matériau anti-ferromagnétique ayant une température de Neel supérieure à celle du substrat ferrimagnétique (32), le procédé étant caractérisé en ce qu'il comprend les autres étapes suivantes : après chauffage de la tête magnétorésistive (11) au-delà de la température de Neel du substrat ferrimagnétique (32), chauffer la tête magnétorésistive au-delà de la température de Neel du matériau anti-ferromagnétique.

3. Procédé pour établir la structure de domaine magnétique d'un capteur magnétorésistif (34, 60) d'une tête magnétorésistive (11), le capteur magnétorésistif étant placé dans un entrefer (56) entre deux couches (32, 42) formant écrans, construites en matériau magnétique, le procédé étant caractérisé en ce qu'il comprend les étapes suivantes : chauffer la tête magnétorésistive (11) jusqu'à une température à laquelle une au moins des couches écrans (32, 42) devient paramagnétique ; appliquer un champ magnétique extérieur au capteur magnétorésistif (34, 60) et aux couches formant écrans (32, 42) pour établir un unique domaine magnétique dans le capteur magnétorésistif ; réduire l'intensité du champ magnétique extérieur pour maintenir l'aimantation du capteur magnétorésistif (34, 60) pendant le refroidissement ; et refroidir la tête magnétorésistive (11) jusqu'à une température à laquelle les deux couches formant écrans (32, 42) sont magnétiques.

4. Procédé selon l'une des revendications 1 ou 2 comprenant la limitation de la largeur du capteur magnétorésistif (60) à la largeur du pôle ferromagnétique médian (42) moins environ dix fois l'épaisseur du pôle médian (42)

5. Procédé selon la revendication 3 comprenant encore : la formation d'une des couches formant écrans (32) en un matériau de ferrite ; et la limitation de la largeur du capteur ferromagnétique (60) à la largeur de l'autre couche formant écran (42) moins environ dix fois l'épaisseur de ladite autre couche formant écran (42).
